# EUROPÄISCHE PATENTANMELDUNG

(11) **EP 4 215 675 A1**
(43) Veröffentlichungstag der Anmeldung: **26.07.2023**
(21) Anmeldenummer: 22152769.0
(22) Anmeldetag: 21.01.2022
(51) Int. Cl.: E02F 9/20, B60L 50/53, E02D 17/13, E21B 7/00

(54) **HYBRID-BAUMASCHINE UND VERFAHREN ZUM BETREIBEN EINER HYBRIDBAUMASCHINE**

(71) Anmelder: BAUER Maschinen GmbH, 86529 Schrobenhausen (DE)
(72) Erfinder: VOIGT, Marco, 86529 Schrobenhausen (DE); OSTERLAND, Matthias, 86529 Schrobenhausen (DE)
(74) Vertreter: Wunderlich & Heim Patentanwälte Partnerschaftsgesellschaft mbB

(57) **Zusammenfassung**

Die Erfindung betrifft eine Hybrid-Baumaschine mit mindestens einem Verbrennungsmotor, mindestens einem Elektromotor, welcher in einem Antriebsmodus zum Antreiben einer Maschinenkomponente und in einem Rekuperationsmodus betreibbar ist, in welchem eine Bewegung der Maschinenkomponente in elektrische Energie umgesetzt wird, mindestens einer Elektroeinrichtung, welche in einem Betriebsmodus elektrische Energie verbraucht, und einem Stromanschluss zum Zuführen elektrischer Energie von einer externen Stromquelle zu der Baumaschine. Nach der Erfindung ist vorgesehen, dass eine Stromverteileinheit vorgesehen ist, welche ausgebildet ist, die von dem mindestens einen Elektromotor rekuperativ erzeugte elektrische Energie ohne Zwischenspeicherung zum Betreiben der mindestens einen Elektroeinrichtung zuzuführen.

## Beschreibung

Die Erfindung betrifft eine Hybrid-Baumaschine mit mindestens einem Verbrennungsmotor, mindestens einem Elektromotor, welcher in einem Antriebsmodus zum Antreiben einer Maschinenkomponente und in einem Rekuperationsmodus betreibbar ist, in welchem eine Bewegung der Maschinenkomponenten in elektrische Energie umgesetzt wird, mindestens einer Elektroeinrichtung, welche in einem Betriebsmodus elektrische Energie verbraucht, und einem Stromanschluss zum Zuführen elektrischer Energie von einer externen Stromquelle zu der Baumaschine, gemäß dem Oberbegriff des Anspruchs 1.

Die Erfindung betrifft weiterhin ein Verfahren zum Betreiben einer Hybrid-Baumaschine mit mindestens einem Verbrennungsmotor, mindestens einem Elektromotor, welcher in einem Antriebsmodus zum Antreiben einer Maschinenkomponente und in einem Rekuperationsmodus betrieben wird, in welchem eine Bewegung der Maschinenkomponente in elektrische Energie umgesetzt wird, mindestens einer Elektroeinrichtung, welche in einem Betriebsmodus elektrische Energie verbraucht, und einem Stromanschluss zum Zuführen elektrischer Energie von einer externen Stromquelle zu der Hybrid-Baumaschine, gemäß dem Oberbegriff des Anspruchs 12.

Baumaschinen haben im Betrieb einen großen Energiebedarf. Baumaschinen sind üblicherweise mit einem Verbrennungsmotor, insbesondere einem Dieselmotor, ausgestattet, welcher etwa unmittelbar Winden oder Fahrantriebe oder weitere Komponenten, wie Hydraulikpumpen und elektrische Generatoren, antreiben kann. Weiterhin ist es bekannt, Baumaschinen als Hybrid-Baumaschinen auszubilden, welche sowohl über einen Verbrennungsmotor als auch elektrisch betrieben werden können.

Es werden seit langem auch elektrisch betriebene Baumaschinen eingesetzt, bei denen zur Zuführung der für den Betrieb erforderlichen erheblichen Energiemenge eine Zuführleitung von außen von einer externen Stromquelle vorgesehen ist. Damit steht der Baumaschine bei einem rein elektrischen Antrieb eine ausreichende Energieversorgung zur Verfügung. Allerdings muss eine Leitungsverbindung zu der externen Stromquelle bestehen. Hierdurch ist die Mobilität der Baumaschine eingeschränkt.

Bei mobilen Hybrid-Baumaschinen ist es üblich, Akkumulatoren an der Baumaschine zum Speichern von elektrischem Strom vorzusehen, um auch einen rein elektrischen Betrieb - zumindest für eine vorgegebene Zeitspanne - zu ermöglichen. Aufgrund des in der Regel sehr hohen Energiebedarfs bei Baumaschinen im Betrieb, insbesondere bei Tiefbaumaschinen mit einer Bodenbearbeitung, ist aber selbst bei Vorsehen einer großen Anzahl von Akkumulatoren mit einem entsprechenden hohen Gewicht ein längerer elektrischer Betrieb kaum möglich.

Hybrid-Baumaschinen haben noch den grundsätzlichen Vorteil, dass vorgesehene elektrische Antriebe auch rekuperativ betrieben werden können, also Bewegungsenergie etwa bei Abbremsvorgängen wieder zurück in elektrische Energie gewandelt werden kann. Die rekuperativ gewonnene elektrische Energie kann dabei in einem Akkumulator zwischengespeichert werden, so dass diese bei Bedarf zur Verfügung steht und an einen elektrischen Verbraucher der Hybrid-Baumaschine geleitet werden kann. Ein Rekuperationsbetrieb spart Energie und reduziert den CO2-Ausstoß.

Jedoch ist auch bei derartigen Hybrid-Baumaschinen eine entsprechende Kapazität an Akkumulatoren vorzusehen, was mit einem erheblichen zusätzlichen Raumbedarf der Baumaschine verbunden ist und zu einer deutlichen Gewichtserhöhung der Baumaschine führt. Aufgrund der aus Transportgründen bestehenden Beschränkungen zu den Abmessungen und dem Maximalgewicht bei einer Baumaschine können kaum ausreichend Akkumulatoren angeordnet werden. Zudem kann das durch Ackumulatoren erheblich erhöhte Gewicht im Gesamtbetrieb der Baumaschine sogar zu einem höheren Energieverbrauch führen.

Der Erfindung liegt die **Aufgabe** zugrunde, eine Hybrid-Baumaschine und ein Betriebsverfahren hierzu anzugeben, mit welchen bei einem einfachen Aufbau der Baumaschine ein energiesparsamer und umweltschonender Betrieb möglich ist.

Die Aufgabe wird zum einen durch eine Hybrid-Baumaschine mit den Merkmalen des Anspruchs 1 und zum anderen durch ein Verfahren mit den Merkmalen des Anspruchs 12 gelöst. Bevorzugte Ausführungsformen der Erfindung sind in den abhängigen Ansprüchen angegeben.

Die erfindungsgemäße Hybrid-Baumaschine ist dadurch gekennzeichnet, dass eine Stromverteileinheit vorgesehen ist, welche ausgebildet ist, die von dem mindestens einen Elektromotor rekuperativ erzeugte elektrische Energie ohne Zwischenspeicherung zum Betreiben der mindestens einen Elektroeinrichtung zuzuführen.

Eine Grundidee der Erfindung liegt darin, bei einer Hybrid-Baumaschine einen Rekuperationsmodus bei mindestens einem Elektromotor vorzusehen, wobei die in einem Rekuperationsmodus erzeugte elektrische Energie über eine Stromverteileinheit unmittelbar zumindest einer Elektroeinrichtung, also mindestens einem weiteren elektrischen Verbraucher, weitergeleitet wird. Es kann somit von einer Anordnung großer und schwerer Akkumulatoren abgesehen werden, die zur Speicherung großer Energiemengen für einen autarken elektrischen Betrieb einer Baumaschine nötig wären. Die Erfindung verfolgt dabei den Ansatz, dass für einen hybriden Antrieb einerseits ein Verbrennungsmotor, insbesondere ein Dieselmotor, und mindestens ein elektrischer Antrieb vorgesehen sind, welcher grundsätzlich über eine externe Stromquelle angetrieben wird. Die rekuperativ erzeugte elektrische Energie im Betrieb der Baumaschine dient zur Unterstützung und insbesondere zur Reduktion der extern zugeführten Menge an elektrischer Energie.

Es kann so eine Hybrid-Baumaschine erreicht werden, welche keine oder keine wesentlichen Akkumulatoren zur Stromspeicherung von rekuperativ erzeugter elektrischer Energie aufweist. Die Hybrid-Baumaschine kann so insgesamt kompakt und mit einem relativ geringen Gewicht ausgebildet werden.

Eine besonders vorteilhafte Weiterbildung der Erfindung besteht darin, dass die Stromverteileinheit ausgebildet ist, abhängig von der Menge an rekuperativ erzeugter Energie und einem Energiebedarf der mindestens einen Elektroeinrichtung eine Zuführung von elektrischer Energie von der externen Stromquelle zu steuern. Die Stromverteileinheit umfasst dabei insbesondere eine Rechnereinrichtung, welche mit einer oder mehreren Messeinrichtungen, insbesondere zum Messen der erzeugten elektrischen Energie und mit entsprechenden Steuerelementen zum Reduzieren oder Erhöhen der elektrischen Energie von der externen Stromquelle in Verbindung steht. Abhängig von der zur Verfügung stehenden Menge an rekuperativ erzeugter elektrischer Energie kann so der Bezug von elektrischer Energie aus der externen Stromquelle bedarfsgerecht gesteuert werden. Dies erspart Kosten und reduziert die Umweltbelastung. Die externe Stromquelle kann insbesondere ein Stromnetz oder ein externer Stromspeicher sein.

Grundsätzlich kann die mindestens eine Elektroeinrichtung, welche mit der erzeugten rekuperativen Energie versorgt wird, ein beliebiger elektrischer Verbraucher sein, insbesondere ein sich von einem ersten Elektromotor unterscheidender zweiter Elektromotor. Besonders bevorzugt ist es nach einer Weiterbildung der Erfindung, dass die Elektroeinrichtung eine elektrisch betriebene Temperiereinrichtung zum Temperieren eines Betriebsmediums umfasst. Mit einer Temperiereinrichtung kann ein gewünschter Wärmestrom von oder zu einem Betriebsmedium eingestellt werden. Hierdurch kann die elektrische Energie in eine thermische Energie umgesetzt und genutzt oder als thermische Energie gespeichert werden. Dabei kann nicht nur eine Wärmezufuhr durch eine Heizeinrichtung sondern auch eine Wärmeabfuhr mittels einer Kühleinrichtung im Sinne der Erfindung als eine Umsetzung in thermische Energie und deren Speicherung angesehen werden.

Besonders vorteilhaft ist es dabei, dass die Temperiereinrichtung eine elektrische Heizeinrichtung, eine elektrische Kühleinrichtung und/oder einen elektrisch betriebenen Lüfter zum Erzeugen eines Kühlluftstroms aufweist. Die Heizeinrichtung kann insbesondere eine Heizspule umfassen. Eine Kühleinrichtung kann einen Kompressor mit Wärmetauschmedium und Wärmetauscher umfassen, wie es von Kühlaggregaten hinlänglich bekannt ist. Zum Kühlen kann auch ein mittels eines Elektromotors betriebener Lüfter zum Erzeugen eines Kühlluftstroms oder ein Peltier-Element vorgesehen sein.

Besonders zweckmäßig ist es nach einer weiteren Ausführungsform der Erfindung, dass ein Reservoir an einem Betriebsmedium, insbesondere Getriebeöl, Hydrauliköl oder Kühlwasser, vorgesehen ist, wobei ein Überschuss an rekuperativ erzeugter elektrischer Energie zum Abkühlen und/oder Aufheizen des Betriebsmediums mittels der Elektroeinrichtung einsetzbar ist. Beim Betrieb einer Baumaschine ist es beispielsweise häufig erforderlich, die für den Betrieb von Hydrauliksystemen notwendige Hydraulikflüssigkeit, die sich im Betrieb erheblich aufheizt, aktiv zu kühlen. Entsprechendes kann für Getriebeöl gelten. Durch die Temperiereinrichtung kann so eine in der Regel nur für eine bestimmte Zeitspanne anfallende rekuperativ erzeugte Energiemenge effizient eingesetzt werden. Selbst bei einer zeitweisen starken Kühlung kann so auch im nachfolgenden Betrieb der Baumaschine eine Energieeinsparung erreicht werden, wenn eine ansonsten notwendige Kühlung nicht oder erst später eingeschaltet werden muss.

In umgekehrter Weise kann die Temperiereinrichtung auch eine Heizeinrichtung sein, welche etwa zum Überwinden einer Kaltstartphase oder beim Betrieb der Baumaschine in einer kalten Umgebung nutzbringend eingesetzt werden kann. So kann beispielsweise Wärme in einer Kühl- oder Heizflüssigkeit für eine Standheizung genutzt werden.

Vorzugsweise kann die Stromverteileinrichtung auch mit einem Bremschopper oder einer vergleichbaren Einrichtung in Verbindung stehen, durch welche nicht-nutzbare elektrische Energie bei der Rekuperation schnell in Wärme umgesetzt wird. Die Wärme kann als Abwärme an die Umgebung abgegeben werden. Hierdurch kann bei einer zu hohen Menge an rekuperativ erzeugten Energie ein Schaden des elektrischen Systems der Baumaschine vermieden werden.

Eine weitere bevorzugte Ausführungsform der Erfindung besteht darin, dass als Maschinenkomponente eine Seilwinde vorgesehen ist, welche durch den Elektromotor antreibbar ist, wobei die Seilwinde zum Heben und Senken einer Last ausgebildet ist. Insbesondere beim Senken der Last kann durch die Seilwinde der mindestens eine Elektromotor als Generator angetrieben werden, wobei so Lageenergie in elektrische Energie transformiert wird.

Mindestens ein Elektromotor kann zum Antreiben eines Verteilgetriebes vorgesehen sein, welches auch von dem Verbrennungsmotor angetrieben werden kann. Über das Verteilgetriebe können verschiedene Aggregate angetrieben werden, etwa mindestens eine Pumpe für das Hydrauliksystem oder mindestens ein Generator. Bei einem rein elektrischen Antrieb mit Stromzuführung von der externen Stromquelle wird das Drehmoment für das Verteilgetriebe durch mindestens einen Elektromotor aufgebracht. Bei einem rein konventionellen Antrieb wird das Drehmoment für das Verteilgetriebe durch mindestens einen Dieselmotor aufgebracht. Bei anfallender rekuperativ gewonnener elektrischer Energie kann der Elektromotor für das Verteilgetriebe zusätzlich angetrieben werden, was im Hybridbetrieb den Verbrauch an Treibstoff für den Verbrennungsmotor oder die Zufuhr von elektrischer Energie von außen reduziert. Es wird der Energiebedarf gesenkt, was kostensparend und umweltschonend ist.

Besonders bevorzugt ist es nach einer Ausführungsvariante der Erfindung, dass die Baumaschine einen Mast oder einen Ausleger aufweist, an welchem ein Bauarbeitsgerät vertikal bewegbar gelagert und über die Seilwinde verfahrbar ist. Insbesondere bei einem Bohrgerät als Baumaschine mit einem Drehbohrantrieb an einem Geräteschlitten ist dieser häufig am Mast auf und ab zu bewegen. Durch eine Nutzung der Energie beim Abwärtsbewegen kann so die Energiebilanz der Baumaschine merklich positiv beeinflusst werden.

Besonders bevorzugt ist es dabei, dass das Bauarbeitsgerät an einem Geräteschlitten gelagert ist. Der Geräteschlitten kann dabei entlang des Mastes verfahrbar gelagert sein, wobei die Hubbewegung des Geräteschlittens über mindestens eine Seilwinde bewirkt wird. An dem Geräteschlitten kann ein Drehbohrantrieb, ein Rüttler oder eine Ramme als Bauarbeitsgerät angebracht sein.

Nach einer weiteren Ausführungsform der Erfindung ist es bevorzugt, dass die Hybrid-Baumaschine als eine mobile Baumaschine mit Rädern oder einem Raupenfahrwerk ausgebildet ist. Bei einem stationären Einsatz an einer Arbeitsstelle kann die Baumaschine maßgeblich über eine Zuführleitung von der externen Stromquelle mit elektrischer Energie versorgt werden. Die Baumaschine kann so maßgeblich elektrisch betrieben werden, wodurch Abgase und Lärm vermieden werden. Dies ist insbesondere in sensitiven Bereichen, wie in Innenstadtbereichen, vorteilhaft oder sogar vorgeschrieben. Die in diesem stationären Betrieb rekuperativ erzeugte Energie reduziert den Bezug von elektrischer Energie von der externen Stromquelle.

Bei einem Verfahren der Hybrid-Baumaschine zu einer anderen Arbeitsstelle kann ohne Weiteres ein Trennen von der elektrischen Zuführleitung erfolgen, wobei in diesem Zustand mit abgetrennter Zuführleitung ein Betrieb der Baumaschine über den Verbrennungsmotor erfolgt. Auch bei einem derartigen konventionellen Betrieb der Hybrid-Baumaschine mit einem Verbrennungsmotor ohne Verbindung zur externen Stromquelle kann die rekuperativ erzeugte Energie unmittelbar zum Betreiben der mindestens einen weiteren Elektroeinrichtung eingesetzt werden. Dies entlastet den Verbrennungsmotor und reduziert somit den Verbrauch an Treibstoff.

Grundsätzlich kann die Hybrid-Baumaschine vielfältig eingesetzt werden. Besonders vorteilhaft ist es nach einer Weiterbildung der Erfindung, dass diese als eine Tiefbaumaschine, insbesondere ein Bohrgerät, eine Schlitzwandfräsenvorrichtung, eine Schlitzwandgreifervorrichtung, ein Rüttlergerät oder ein Rammgerät ausgebildet ist. Ein Bohrgerät dient insbesondere zum Erstellen von Bohrlöchern im Boden, wie dies insbesondere zur Erstellung von Gründungspfählen im Boden erforderlich ist. Bei einer Schlitzwandfräsenvorrichtung ist eine Schlitzwandfräse mit üblicherweise zwei Paaren von Fräsrädern vorgesehen, mit welchen ein Frässchlitz im Boden durch vertikales Absenken und Ziehen erzeugt werden kann. In ähnlicher Weise ist eine Schlitzwandgreifervorrichtung mit einem Schlitzwandgreifer ausgebildet, welcher einen Schlitz im Boden mittels betätigbaren Greiferschaufeln bilden kann. Mittels eines Rüttlergerätes oder eines Rammgerätes können Pfähle und Spundwandelemente im wesentlichen vertikal in den Boden eingetrieben werden.

Eine weitere bevorzugte Ausführungsform der erfindungsgemäßen Hybrid-Baumaschine besteht darin, dass durch den Verbrennungsmotor ein Fahrantrieb, mindestens ein Hydraulikaggregat und/oder mindestens ein elektrischer Generator antreibbar ist. Der Verbrennungsmotor kann so bei einem konventionellen Antrieb der Baumaschine als ein zentraler Antrieb fungieren, welcher einen Fahrantrieb und insbesondere ein Hydraulikaggregat und/oder einen elektrischen Generator antreiben kann. Bei einem Hydraulikaggregat wird über den Verbrennungsmotor eine oder mehrere Hydraulikpumpen angetrieben, welche hydraulische Verbraucher an der Baumaschine mit Hydraulikfluid versorgt.

Über das Antreiben eines elektrischen Generators können der mindestens eine Elektromotor sowie weitere elektrische Verbraucher zentral mit elektrischem Strom versorgt werden, auch wenn keine Verbindung zu einer externen Stromquelle besteht.

Es ist bevorzugt, dass die Hybrid-Baumaschine keine oder nur eine kleine Stromspeichereinheit aufweist, welche grundsätzlich nicht zum Speichern großer Strommengen ausgelegt ist, wie diese bei der Rekuperation anfallen.

Das erfindungsgemäße Verfahren zum Betreiben einer Hybrid-Baumaschine ist dadurch gekennzeichnet, dass eine Stromverteileinheit vorgesehen ist, durch welche die von dem mindestens einen ersten Elektromotor rekuperativ erzeugte elektrische Energie ohne Zwischenspeicherung der mindestens einen Elektroeinrichtung zugeführt wird, um diese elektrisch zu betreiben.

Das erfindungsgemäße Verfahren kann insbesondere mit der zuvor beschriebenen erfindungsgemäßen Hybrid-Baumaschine durchgeführt werden. Dabei können die zuvor beschriebenen Vorteile erzielt werden.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine Seitenansicht einer erfindungsgemäßen Hybrid-Baumaschine; und
- Fig. 2: eine schematische Darstellung zum erfindungsgemäßen Energiemanagement.

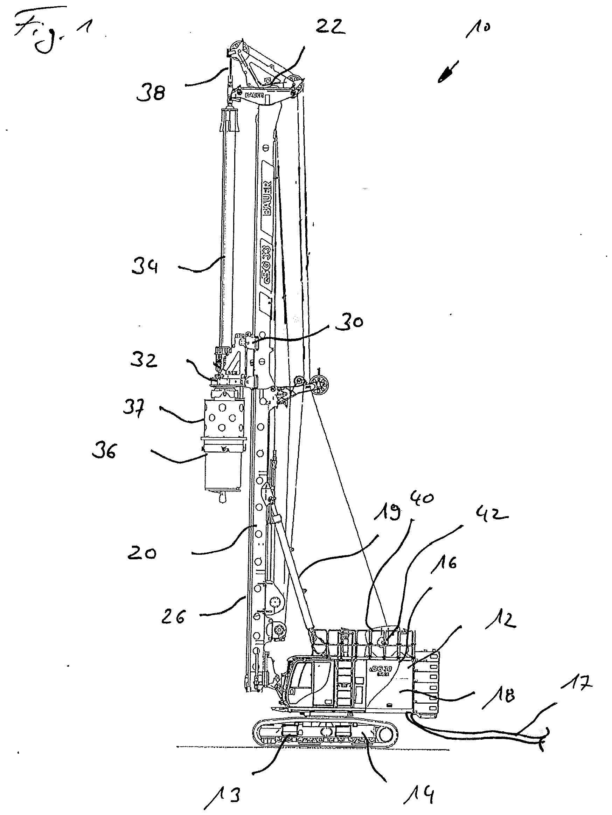

In Fig. 1 ist ein Beispiel einer erfindungsgemäßen Hybrid-Baumaschine 10 dargestellt, welche als eine Tiefbaumaschine, insbesondere ein Bohrgerät zum Erstellen von Gründungspfählen, ausgebildet ist. Die Hybrid-Baumaschine 10 weist ein Trägergerät 12 mit einem Unterwagen 14 auf, welcher ein Raupenfahrwerk 13 umfasst.

Auf dem Unterwagen 14 ist drehbar um eine vertikale Drehachse ein Oberwagen 16 mit einer Fahrerkabine gelagert.

An dem Oberwagen 16 sind die Antriebsaggregate angeordnet, welche von Verkleidungselementen 18 verdeckt sind, welche ein Gehäuse des Oberwagens 16 bilden. In dem Oberwagen 16 sind mindestens ein Verbrennungsmotor, insbesondere ein Dieselmotor, sowie ein Elektroantrieb, insbesondere mindestens ein Elektromotor, angeordnet, durch welche vorzugsweise über eine zentrales Verteilgetriebe mindestens eine Hydraulikpumpe eines Hydrauliksystems und/oder eine Generator antreibbar sind. Zur Zuführung von Strom von einer externen Stromquelle ist am Oberwagen 16 eine Zuführleitung 17 angeschlossen.

An dem Oberwagen 16 ist über eine Verstellmechanik 19 ein Mast 20, welcher in dem Ausführungsbeispiel ein Mäkler ist, angebracht, welcher im Betrieb eine im Wesentlichen vertikale Arbeitsposition aufweisen kann.

Der Mast 20 kann an einer Vorderseite mit einer Linearführung 26 versehen sein, entlang welcher ein Geräteschlitten 30 vertikal verfahrbar gelagert werden kann. Im dargestellten Ausführungsbeispiel ist an dem Geräteschlitten 30 zum Bilden eines Bauarbeitsgerät 32 ein Drehbohrantrieb angeordnet, welcher zum drehenden Antreiben eines Bohrgestänges 34, insbesondere einer Kellystange, ausgebildet sein kann. An der Unterseite des Bohrgestänges 34 ist ein Bohrwerkzeug 36 angebracht, welches in der dargestellten Ausführung beispielhaft als ein Kastenbohrer ausgebildet ist. Das Bohrgestänge 34 ist über ein Seil 38 vertikal verstellbar gehalten, welches über einen Mastkopf 22 zu einer Seilwinde 40 am Oberwagen 16 geführt ist.

Die Seilwinde 40 wird von einem ersten Elektromotor 42 zum Heben und Senken des Bohrgestänges 34 mit dem Bohrwerkzeug 36 und bei Verriegelung mit dem Drehbohrantrieb so das Bauarbeitsgerät 32 insgesamt betätigt. Beim Senken kann der erste Elektromotor 42 rekuperativ als ein Generator betrieben werden, wobei elektrische Energie erzeugt wird.

Weiterhin kann an dem Arbeitsschlitten 30 ein Antriebselement 37 für Bohrrohre vorgesehen sein, so dass Bohrrohre zusammen mit dem Bohrwerkzeug 36 für ein verrohrtes Bohren in den Boden eingebracht werden können. Das Antriebselement 37 kann grundsätzlich ebenfalls über eine Seilwinde mit einem weiteren Elektromotor betrieben werden, welcher bei einem Senken auch rekuperativ elektrische Energie erzeugen kann.

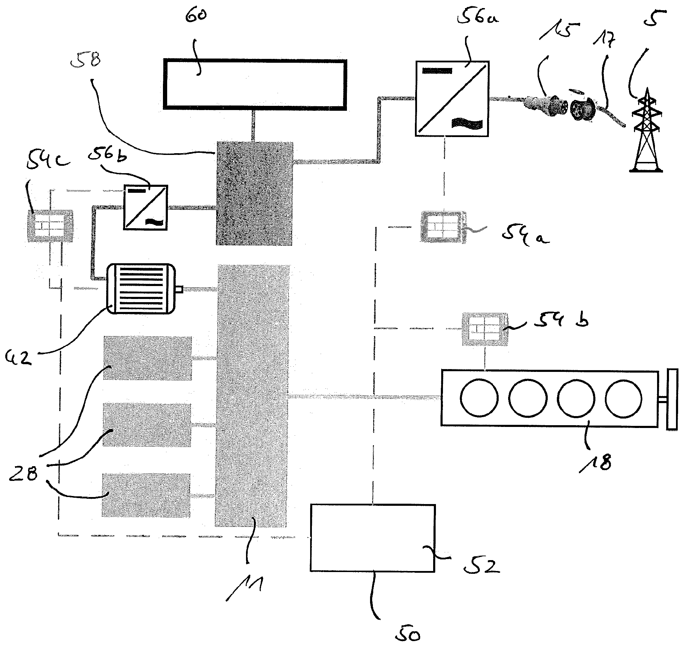

In Fig. 2 ist ein mögliches erfindungsgemäßes Energiemanagement schematisch veranschaulicht. Für einen konventionellen Betrieb ist ein Verbrennungsmotor 18 vorgesehen, welcher ein Verteilgetriebe 11 antreiben kann. Über das Verteilgetriebe 11 können verschiedene Antriebsaggregate, insbesondere schematisch dargestellte Pumpen 28 zum Pumpen von Hydraulikfluid zu hydraulischen Verbrauchern angetrieben werden.

Für einen elektrischen Antrieb ist mindestens ein Elektromotor 42 vorgesehen, welcher ebenfalls zusätzlich oder alternativ zu dem Verbrennungsmotor 18 das Verteilgetriebe 11 antreiben kann. Zur Energieversorgung ist der Elektromotor 42 direkt oder indirekt mit einer externen Stromquelle 5 über eine Zuführleitung 17 und einen Stromanschluss 15 am Oberwagen 16 verbunden. Der Stromanschluss kann ebenso gut am Unterwagen 14 angeordnet sein. Am Stromanschluss 15 kann ein erster Inverter 56a vorgesehen sein, welcher Wechselstrom in Gleichstrom richten und über welchen auch eine Zufuhr der Strommenge gesteuert werden kann.

Der mindestens eine Elektromotor 42, welcher im dargestellten Ausführungsbeispiel mit dem Verteilergetriebe 11 verbunden ist, kann auch als ein Generator in einem Rekuperationsmodus betrieben werden, wobei zugeführte mechanische Drehenergie in elektrische Energie gewandelt werden kann. Die rekuperativ gewonnene elektrische Energie kann über einen zweiten Inverter 56b zu einem sogenannten DC-Link 58 als Teil einer Stromverteileinheit 50 zugeleitet werden. An dem DC-Link 58, insbesondere einer Stromverteilschiene, können eine oder mehrere Elektroeinrichtungen 60 als weitere elektrische Verbraucher vorgesehen sein. Diese können von der externen Stromquelle 5 oder nach Möglichkeit auch von dem rekuperativ betriebenen Elektromotor 42 über den DC-Link 58 mit elektrischer Energie versorgt werden. In diesem Fall würde vorzugsweise der Elektromotor 42 etwa eine Seilwinde nicht direkt antreiben, sondern über das Verteilergetriebe 11. Dieses wiederum eine Hydraulikpumpe und diese einen Hydraulikmotor der Seilwinde antreiben. Der Hydraulikkreislauf zwischen Hydraulikmotor und Hydraulikpumpe kann ein geschlossener Kreislauf sein, so dass bei einer Lastabsenkung die Hydraulikpumpe den Hydraulikmotor antreibt, der wiederum den Elektromotor41 als Generator über das Verteilergetriebe 11 antreibt.

Für ein intelligentes Energiemanagement kann die Stromverteileinheit 50 mit einer Hauptrechnereinheit 52 versehen sein. Die Hauptrechnereinheit 52 kann mit Untereinheiten 54a, 54b und 54c zum Steuern und/oder Messen verbunden sein. Eine erste Untereinheit 54a ist beispielhaft mit dem ersten Inverter 56a zur Steuerung der Stromzuführung von der externen Stromquelle 5 verbunden. Eine zweite Untereinheit 54b kann zur Steuerung des Dieselmotors 18 vorgesehen sein. Eine dritte Untereinheit 54c kann mit dem zweiten Inverter 56b und dem Elektromotor 42 zum Datenaustausch und zur Steuerung verbunden sein.

Weiterhin kann über die Stromverteileinheit 50 mit der Hauptrechnereinheit 52 auch ein gezielter Betrieb von mindestens einer Elektroeinrichtung 60 gesteuert werden, um etwa rekuperativ anfallende elektrische Energie ohne Zwischenspeicherung unmittelbar nutzen zu können. Die Elektroeinrichtung 60 kann insbesondere eine Temperiereinrichtung, insbesondere eine Kühleinrichtung, umfassen, mit welcher ein Betriebsmedium, insbesondere Hydraulikflüssigkeit, gezielt gekühlt werden kann. Hierdurch kann auch eine relativ große Menge an rekuperativ gewonnener elektrischer Energie schnell und effizient ohne Zwischenspeicherung in Akkumulatoren in der Hybrid-Baumaschine 10 genutzt werden, wobei ein Gesamtenergieverbrauch der Hybrid-Baumaschine 10 gesenkt werden kann.

## Patentansprüche

1. Hybrid-Baumaschine mit
- mindestens einem Verbrennungsmotor (18),
- mindestens einem Elektromotor (42), welcher in einem Antriebsmodus zum Antreiben einer Maschinenkomponente und in einem Rekuperationsmodus betreibbar ist, in welchem eine Bewegung der Maschinenkomponente in elektrische Energie umgesetzt wird,
- mindestens einer Elektroeinrichtung (60), welche in einem Betriebsmodus elektrische Energie verbraucht, und
- einem Stromanschluss (15) zum Zuführen elektrischer Energie von einer externen Stromquelle (5) zu der Hybrid-Baumaschine (10),
**dadurch gekennzeichnet,**
**dass** eine Stromverteileinheit (50) vorgesehen ist, welche ausgebildet ist, die von dem mindestens einen Elektromotor (42) rekuperativ erzeugte elektrische Energie ohne Zwischenspeicherung zum Betreiben der mindestens einen Elektroeinrichtung (60) zuzuführen.

2. Hybrid-Baumaschine nach Anspruch 1,
**dadurch gekennzeichnet,**
**dass** die Stromverteileinheit (50) ausgebildet ist, abhängig von der Menge an rekuperativ erzeugter Energie und einem Energiebedarf der mindestens einen Elektroeinrichtung (60) eine Zuführung von elektrischer Energie von der externen Stromquelle (5) zu steuern.

3. Hybrid-Baumaschine nach Anspruch 1 oder 2,
**dadurch gekennzeichnet,**
**dass** die Elektroeinrichtung (60) eine elektrisch betriebene Temperiereinrichtung zum Temperieren eines Betriebsmediums umfasst.

4. Hybrid-Baumaschine nach Anspruch 3,
**dadurch gekennzeichnet,**
**dass** die Temperiereinrichtung eine elektrische Heizeinrichtung, eine elektrische Kühleinrichtung und/oder einen elektrisch betriebenen Lüfter zum Erzeugen eines Kühlluftstromes aufweist.

5. Hybrid-Baumaschine nach einem der Ansprüche 1 bis 4,
**dadurch gekennzeichnet,**
**dass** ein Reservoir an einem Betriebsmedium, insbesondere Getriebeöl, Hydrauliköl oder Kühlwasser, vorgesehen ist, wobei ein Überschuss an rekuperativ erzeugter elektrischer Energie zum Abkühlen oder Aufheizen des Betriebsmediums mittels der Elektroeinrichtung (60) einsetzbar ist.

6. Hybrid-Baumaschine nach einem der Ansprüche 1 bis 5,
**dadurch gekennzeichnet,**
**dass** als Maschinenkomponente eine Seilwinde (40) vorgesehen ist, welche durch den Elektromotor (42) antreibbar ist, wobei die Seilwinde (40) zum Heben und Senken einer Last ausgebildet ist.

7. Hybrid-Baumaschine nach Anspruch 6,
**dadurch gekennzeichnet,**
**dass** die Hybrid-Baumaschine (10) einen Mast (20) oder einen Ausleger aufweist, an welchem ein Bauarbeitsgerät (32) vertikal bewegbar gelagert und über die Seilwinde (40) verfahrbar ist.

8. Hybrid-Baumaschine nach Anspruch 7,
**dadurch gekennzeichnet,**
**dass** das Bauarbeitsgerät (32) an einem Geräteschlitten (30) gelagert ist.

9. Hybrid-Baumaschine nach einem der Ansprüche 1 bis 8,
**dadurch gekennzeichnet,**
**dass** diese als eine mobile Baumaschine mit Rädern oder einem Raupenfahrwerk (13) ausgebildet ist.

10. Hybrid-Baumaschine nach einem der Ansprüche 1 bis 9,
**dadurch gekennzeichnet,**
**dass** diese als eine Tiefbaumaschine, insbesondere ein Bohrgerät, eine Schlitzwandfräsenvorrichtung, eine Schlitzwandgreifervorrichtung, ein Rüttlergerät oder ein Rammgerät ausgebildet ist.

11. Hybrid-Baumaschine nach einem der Ansprüche 1 bis 10,
**dadurch gekennzeichnet,**
**dass** durch den Verbrennungsmotor (18) ein Fahrantrieb, mindestens ein Hydraulikaggregat und/oder mindestens ein elektrischer Generator antreibbar ist.

12. Verfahren zum Betreiben einer Hybrid-Baumaschine (10), insbesondere nach einem der Ansprüche 1 bis 11, mit
- mindestens einem Verbrennungsmotor (18),
- mindestens einem Elektromotor (42), welcher in einem Antriebsmodus zum Antreiben einer Maschinenkomponente und in einem Rekuperationsmodus betrieben wird, in welchem eine Bewegung der Maschinenkomponente in elektrische Energie umgesetzt wird,
- mindestens einer Elektroeinrichtung (60), welche in einem Betriebsmodus elektrische Energie verbraucht, und
- einem Stromanschluss (15) zum Zuführen elektrischer Energie von einer externen Stromquelle (5) zu der Hybrid-Baumaschine (10),
**dadurch gekennzeichnet,**
**dass** eine Stromverteileinheit (50) vorgesehen ist, durch welche die von dem mindestens einen Elektromotor (42) rekuperativ erzeugte elektrische Energie ohne Zwischenspeicherung der mindestens einen Elektroeinrichtung (60) zugeführt wird, um diese elektrisch zu betreiben.

## Geänderte Patentansprüche

### Geänderte Patentansprüche gemäss Regel 137(2) EPÜ.

1. Hybrid-Baumaschine mit
- mindestens einem Verbrennungsmotor (18),
- mindestens einem Elektromotor (42), welcher in einem Antriebsmodus zum Antreiben einer Maschinenkomponente und in einem Rekuperationsmodus betreibbar ist, in welchem eine Bewegung der Maschinenkomponente in elektrische Energie umgesetzt wird,
- mindestens einer Elektroeinrichtung (60), welche in einem Betriebsmodus elektrische Energie verbraucht,
**dadurch gekennzeichnet,**
**dass** ein Stromanschluss (15) zum Zuführen elektrischer Energie von einer externen Stromquelle (5) zu der Hybrid-Baumaschine (10) vorgesehen ist und dass eine Stromverteileinheit (50) vorgesehen ist, welche ausgebildet ist, die von dem mindestens einen Elektromotor (42) rekuperativ erzeugte elektrische Energie ohne Zwischenspeicherung zum Betreiben der mindestens einen Elektroeinrichtung (60) zuzuführen.

2. Hybrid-Baumaschine nach Anspruch 1,
**dadurch gekennzeichnet,**
**dass** die Stromverteileinheit (50) ausgebildet ist, abhängig von der Menge an rekuperativ erzeugter Energie und einem Energiebedarf der mindestens einen Elektroeinrichtung (60) eine Zuführung von elektrischer Energie von der externen Stromquelle (5) zu steuern.

3. Hybrid-Baumaschine nach Anspruch 1 oder 2,
**dadurch gekennzeichnet,**
**dass** die Elektroeinrichtung (60) eine elektrisch betriebene Temperiereinrichtung zum Temperieren eines Betriebsmediums umfasst.

4. Hybrid-Baumaschine nach Anspruch 3,
**dadurch gekennzeichnet,**
**dass** die Temperiereinrichtung eine elektrische Heizeinrichtung, eine elektrische Kühleinrichtung und/oder einen elektrisch betriebenen Lüfter zum Erzeugen eines Kühlluftstromes aufweist.

5. Hybrid-Baumaschine nach einem der Ansprüche 1 bis 4,
**dadurch gekennzeichnet,**
**dass** ein Reservoir an einem Betriebsmedium, insbesondere Getriebeöl, Hydrauliköl oder Kühlwasser, vorgesehen ist, wobei ein Überschuss an rekuperativ erzeugter elektrischer Energie zum Abkühlen oder Aufheizen des Betriebsmediums mittels der Elektroeinrichtung (60) einsetzbar ist.

6. Hybrid-Baumaschine nach einem der Ansprüche 1 bis 5,
**dadurch gekennzeichnet,**
**dass** als Maschinenkomponente eine Seilwinde (40) vorgesehen ist, welche durch den Elektromotor (42) antreibbar ist, wobei die Seilwinde (40) zum Heben und Senken einer Last ausgebildet ist.

7. Hybrid-Baumaschine nach Anspruch 6,
**dadurch gekennzeichnet,**
**dass** die Hybrid-Baumaschine (10) einen Mast (20) oder einen Ausleger aufweist, an welchem ein Bauarbeitsgerät (32) vertikal bewegbar gelagert und über die Seilwinde (40) verfahrbar ist.

8. Hybrid-Baumaschine nach Anspruch 7,
**dadurch gekennzeichnet,**
**dass** das Bauarbeitsgerät (32) an einem Geräteschlitten (30) gelagert ist.

9. Hybrid-Baumaschine nach einem der Ansprüche 1 bis 8,
**dadurch gekennzeichnet,**
**dass** diese als eine mobile Baumaschine mit Rädern oder einem Raupenfahrwerk (13) ausgebildet ist.

10. Hybrid-Baumaschine nach einem der Ansprüche 1 bis 9,
**dadurch gekennzeichnet,**
**dass** diese als eine Tiefbaumaschine, insbesondere ein Bohrgerät, eine Schlitzwandfräsenvorrichtung, eine Schlitzwandgreifervorrichtung, ein Rüttlergerät oder ein Rammgerät ausgebildet ist.

11. Hybrid-Baumaschine nach einem der Ansprüche 1 bis 10,
**dadurch gekennzeichnet,**
**dass** durch den Verbrennungsmotor (18) ein Fahrantrieb, mindestens ein Hydraulikaggregat und/oder mindestens ein elektrischer Generator antreibbar ist.

12. Verfahren zum Betreiben einer Hybrid-Baumaschine (10), insbesondere nach einem der Ansprüche 1 bis 11, mit
- mindestens einem Verbrennungsmotor (18),
- mindestens einem Elektromotor (42), welcher in einem Antriebsmodus zum Antreiben einer Maschinenkomponente und in einem Rekuperationsmodus betrieben wird, in welchem eine Bewegung der Maschinenkomponente in elektrische Energie umgesetzt wird,
- mindestens einer Elektroeinrichtung (60), welche in einem Betriebsmodus elektrische Energie verbraucht,
**dadurch gekennzeichnet,**
**dass** ein Stromanschluss (15) zum Zuführen elektrischer Energie von einer externen Stromquelle (5) zu der Hybrid-Baumaschine (10) vorgesehen ist und dass eine Stromverteileinheit (50) vorgesehen ist, durch welche die von dem mindestens einen Elektromotor (42) rekuperativ erzeugte elektrische Energie ohne Zwischenspeicherung der mindestens einen Elektroeinrichtung (60) zugeführt wird, um diese elektrisch zu betreiben.
